# EUROPÄISCHE PATENTSCHRIFT

(11) **EP 1 007 908 B1**
(45) Veröffentlichungstag und Bekanntmachung des Hinweises auf die Patenterteilung: **19.06.2002**
(21) Anmeldenummer: 98925439.6
(22) Anmeldetag: 26.03.1998
(51) Int. Cl.: G01D 5/165, G01B 7/30

(54) **ANORDNUNG ZUR VERSTELLUNG EINES PARAMETERS MIT EINEM DREHWINKELGEBER**
ARRANGEMENT FOR ADJUSTING A PARAMETER WITH A ROTATIONAL ANGLE SENSOR
DISPOSITIF POUR REGLER UN PARAMETRE AVEC UN DETECTEUR D'ANGLE DE ROTATION

(30) Priorität: 26.08.1997 DE 19737063
(43) Veröffentlichungstag der Anmeldung: 14.06.2000
(73) Patentinhaber: ROBERT BOSCH GMBH, 70442 Stuttgart (DE)
(72) Erfinder: LENZE, Karsten, D-30880 Laatzen (DE); DE VRIES, Claus, D-31234 Edemissen (DE); MARAHRENS, Horst, D-31036 Eime (DE); HUEBNER, Achim, D-31199 Diekholzen (DE)
(86) Internationale Anmeldenummer: DE9800884
(87) Internationale Veröffentlichungsnummer: WO9910711

(56) Entgegenhaltungen:
- EP-A- 0 051 427
- DE-A- 3 533 249
- US-A- 2 836 064
- US-A- 5 589 779

## Beschreibung

### Stand der Technik

Die Erfindung geht von einer Anordnung zur Verstellung eines Parameters eines elektrischen Geräts mit einem Drehwinkelgeber zur Erzeugung eines von der Winkelstellung eines einen Drehwinkel übertragenden Elements, insbesondere eines Betätigungselements in Form eines Drehknopfes, abhängigen Signals nach der Gattung des Anspruchs 1 aus.

Es sind Drehwinkelgeber in Form von Potentiometern bekannt, die beispielsweise bei Rundfunkempfängern zur Einstellung der Wiedergabelautstärke verwendet werden. Diese Potentiometer werden in der Regel als Spannungsteiler eingesetzt, so daß durch Drehen des Potentiometer-Mittelabgriffs von einem Anfangs- bis zu einem Endanschlag, d.h. um beispielsweise einen Winkel von 270°, der komplette am Potentiometer anliegende Spannungsbereich zur Einstellung beispielsweise der Wiedergabelautstärke zur Verfügung steht. Im vorliegenden Fall steht somit die Wiedergabelautstärke immer in direkter Beziehung zur am Potentiometer abgegriffenen Spannung und damit zur Position des Potentiometer-Mittelabgriffs.

In einem fernbedienbaren Gerät kann daher ein herkömmliches Potentiometer zur Lautstärkeeinstellung nicht sinnvoll eingesetzt werden, was anhand des folgenden Beispiels deutlich wird.

Bei einer linearen Lautstärkeregelung von einem Minimalwert 0 auf einen fiktiven Maximalwert von beispielsweise 60 stehe das Potentiometer auf einem Wert 10. Die Lautstärke wird nun über eine Fernbedienung auf einen Wert 50 angehoben. Soll nun anschließend die Lautstärke über das Potentiometer gesenkt werden, so ist nur eine Reduzierung um 10 Einheiten auf einen Wert 40 möglich, da dann der untere Anschlag des Potentiometers erreicht ist. Für eine solche Anwendung werden nach dem Stand der Technik teure Motorpotentiometer eingesetzt, die bei Verstellung des Geräteparameters über eine Fernbedienung derart nachgeführt werden, daß die am Potentiometer eingestellte Spannung stets dem zugehörigen Parameterwert entspricht.

Alternativ zur Verwendung eines Motorpotentiometers zur Lösung dieser Problemstellung ist die Verwendung eines Encoders bzw. Inkrementengebers bekannt. Solche Encoder erzeugen bei einer Drehung zwei gegeneinander phasenverschobene Rechteckimpulse, die gezählt und hinsichtlich der Drehrichtung ausgewertet werden. Preiswerte Encoder ermöglichen dabei bis zu ungefähr 30 Impulse pro 360° Drehung, so daß bei einer gewünschten hohen Auflösung und einem großen Wertebereich des zu verstellenden Parameters zur Abdeckung des gesamten Wertebereiches eine Vielzahl von Umdrehungen des Encoders notwendig ist.

Aus der Druckschrift US-A-5,589,779 ist ein Drehwinkelgeber bekannt, der die folgenden Merkmale aufweist: eine kreisförmige Widerstandsbahn, zwei mit der kreisförmigen Widerstandsbahn fest verbundene Abgriffe, einen um dem Mittelpunkt der Widerstandsbahn anschlagfrei drehbaren und mit einem einen Drehwinkel übertragenden Element verbundenen dritten Abgriff und eine Auswerteschaltung zur Erzeugung eines die Winkelstellung des dritten Abgriffs kennzeichnenden Signals durch Auswertung der Widerstandsverhältnisse zwischen mindestens zweien der Abgriffe oder eines aus diesen abgleiteten Signals auf.

Aus der Druckschrift DE-A-35 33 249 ist es bekannt, zur Steuerung eines Stellgliedes die zeitliche Änderung einer von einem Potentiometer ohne mechanischen Anschlag abgegebenen Spannung auszuwerten.

### Vorteile der Erfindung

Die erfindungsgemäße Anordnung mit den Merkmalen des Anspruchs 1 vereinigt die Vorteile eines herkömmlichen Potentiometers mit denen eines Encoders bzw. Inkrementengebers, nämlich eine zumindest theoretisch beliebig hohe Auflösung bei gleichzeitig anschlagfreier und somit beliebiger Drehbarkeit in beide Drehrichtungen.

Die erfindungsgemäße Anordnung zur Verstellung eines Parameters eines elektrischen Gerätes ermöglicht somit eine Parametereinstellung ausgehend von einem vorgegebenen Wert ohne festen Bezug des Parameterwertes zur Winkelstellung des Drehwinkelgebers. Der erfindungsgemäße Drehwinkelgeber ist somit beispielsweise als Lautstärkesteller für ein auch fernbedienbares Rundfunkgerät geeignet.

Vorteilhafte Ausgestaltungen der erfindungsgemäßen Anordnung sind in den Unteransprüchen angegeben.

So ist es von Vorteil, den Drehwinkelgeber als veränderlichen Spannungsteiler zur Ableitung eines dem aktuellen Drehwinkel entsprechenden Signals zu verwenden.

Von besonderem Vorteil ist es weiterhin, wenn die kreisförmige Widerstandsbahn des Drehwinkelgebers keine Unterbrechung aufweist, da in diesem Falle ein Kurzschluß der Widerstandsbahnenden durch den Schleifkontakt und somit unter Umständen unerwünschte Zustände vermieden werden.

### Zeichnungen

Ausführungsbeispiele der Erfindung sind in den Zeichnungen dargestellt und werden in der Folge näher erläutert.

Es zeigen Figur 1 schematisch einen Drehwinkelgeber mit einer Beschaltung zur Erzeugung eines drehwinkelabhängigen Signals, Figur 2a eine Version des Drehwinkelgebers mit ununterbrochener Widerstandsbahn und zwei festen Abgriffen inklusive Beschaltung, Figur 2b beispielhaft die ermittelten Spannungsverläufe an den beiden festen Abgriffen in Abhängigkeit der Winkelstellung des dritten Abgriffs, Figur 3a eine Version des Drehwinkelgebers mit ununterbrochener Leiterbahn und drei festen Abgriffen inklusive Beschaltung, und Figur 3b beispielhaft die in Abhängigkeit des Drehwinkels des dritten Abgriffs am dritten Abgriff gemessenen Spannungsverläufe.

### Beschreibung der Ausführungsbeispiele

Der Drehwinkelgeber wird in der Folge am Beispiel eines Lautstärkestellers für ein Autoradio beschrieben. Dies bedeutet jedoch nicht, daß der Drehwinkelgeber auf diese Anwendung beschränkt ist.

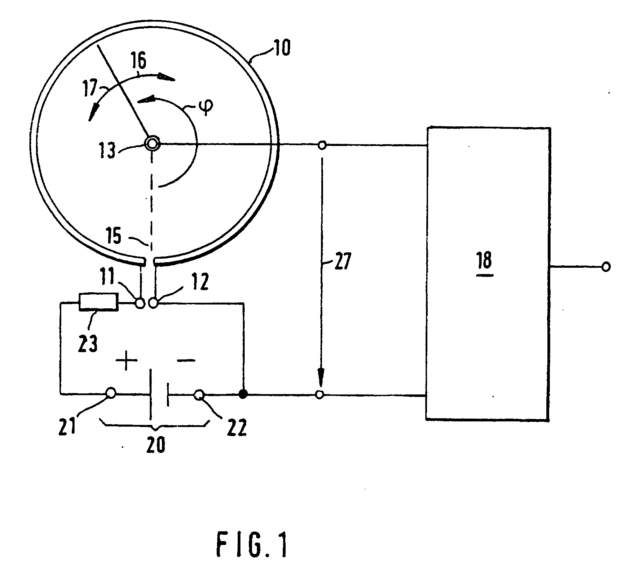

Figur 1 zeigt ein erstes Ausführungsbeispiel eines Drehwinkelgebers.

Eine kreisförmige Widerstandsbahn 10 weist beiderseits einer kurzen Unterbrechung in der Größenordnung von höchstens wenigen Winkelgraden in unmittelbarer Nachbarschaft der Unterbrechung 15 zwei Abgriffe 11 und 12 auf, die fest mit der Widerstandsbahn verbunden sind. Weiterhin ist die Widerstandsbahn 10 durch einen dritten Abgriff 13 kontaktiert, der im vorliegenden Fall durch einen auf der Widerstandsbahn aufliegenden und infolge Federkraft auf diese aufgedrückten, um den Mittelpunkt der Widerstandsbahn anschlagfrei drehbaren Schleifkontakt realisiert ist. Mit dem drehbar gelagerten Schleifkontakt 13 ist ein einen Drehwinkel übertragendes Element mechanisch gekoppelt, im vorliegenden Fall eines Lautstärkestellers handelt es sich dabei beispielsweise um einen auf die Drehachse des Schleifkontakts aufgesetzten Drehknopf.

Der erste Abgriff 11 der Widerstandsbahn 10 ist über einen ohmschen Widerstand 23 mit einem ersten Kontakt 21 einer Gleichspannungsquelle 20 verbunden, deren zweiter Kontakt 22 an den zweiten Abgriff 12 der Widerstandsbahn angeschlossen ist. In Abhängigkeit der Winkelstellung ϕ des Schleifers 13 ergibt sich am dritten Abgriff 13, also am Schleifkontakt, eine dem Drehwinkel ϕ proportionale Spannung 27.

Der Widerstand 23 hat hier die Funktion, einen Kurzschluß der Spannungsquelle 20 für den Fall zu verhindern, daß der Schleifkontakt 13 bei der Winkelstellung ϕ=0° die Unterbrechung der Widerstandsbahn 15 überbrückt. Er dient somit lediglich einer Kurzschlußstrombegrenzung.

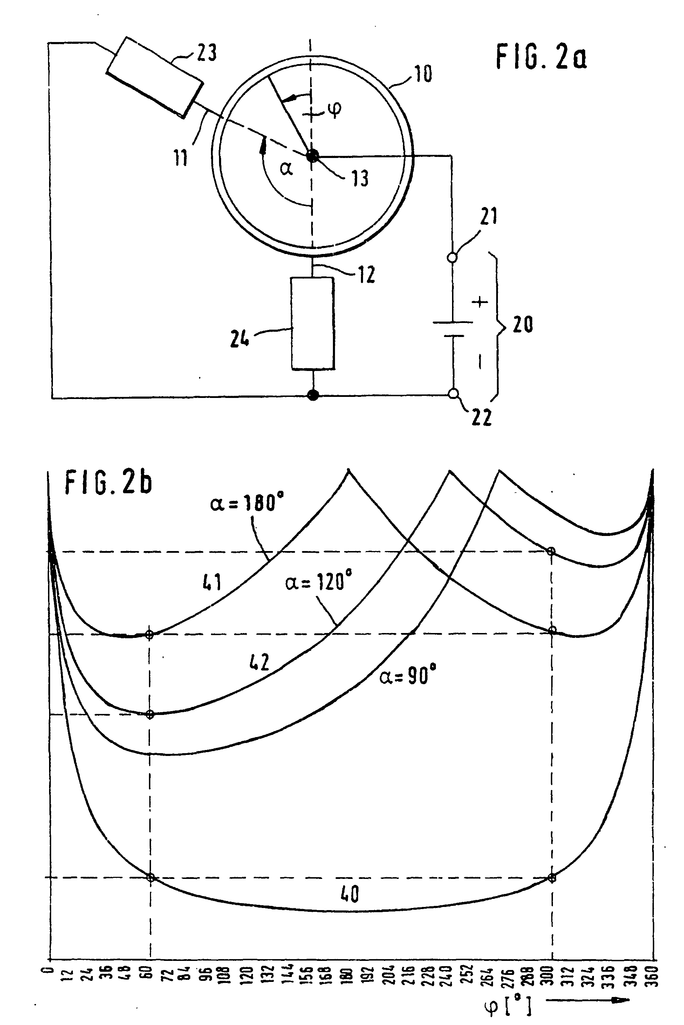

Ein weiteres Ausführungsbeispiel des Drehwinkelgebers ist in Figur 2a dargestellt.

Ein erster Abgriff 11 der hier ununterbrochenen Widerstandsbahn 10 ist über einen ersten ohmschen Widerstand 23 mit einem zweiten Anschluß 22 einer Gleichspannungsquelle 20 verbunden. Ebenso ist ein zweiter Abgriff 12 der Widerstandsbahn 10, der in einem Winkel α ungleich 0° und idealerweise 90° ≤ α ≤ 180° gegenüber dem ersten Abgriff 11 auf der Leiterbahn 10 angeordnet ist, über einen zweiten Widerstand 24 mit der zweiten Anschlußklemme 22 der Spannungsquelle 20 verbunden. Der erste Anschluß 21 der Spannungsquelle 20 ist mit dem dritten Abgriff 13, also über den mit dem einen Drehwinkel übertragenden Element verbundenen Schleifer mit der Leiterbahn 10 verbunden. In Figur 2b sind Spannungsverläufe für den ersten und den zweiten Abgriff 11, 12 über dem Drehwinkel ϕ des Schleifers mit der Winkelstellung α der beiden Abgriffe 11, 12 gegeneinander als Parameter dargestellt. Figur 2b ist zu entnehmen, daß bei einer 360°-Drehung des Schleifers an den beiden ersten Abgriffen 11, 12 jeweils eine parabelförmig verlaufende Spannung abgenommen werden kann. Durch die unterschiedliche Anordnung der Abgriffe entsteht dabei eine Phasenverschiebung der beiden Signale gegeneinander. Sind die Abgriffe genau einander gegenüber angeordnet, so beträgt die Phasenverschiebung 180°. Bei einem solchen Aufbau gibt es immer genau zwei Drehwinkel , bei denen die gleichen Spannungswerte an den ersten beiden Abgriffen 11 und 12 gemessen werden. Somit ist bei einer Anordnung der beiden Abgriffe unter einem Winkel α=180° gegeneinander eine eindeutige Bestimmung der Schleiferstellung und damit des Drehwinkels ϕ in Abhängigkeit der an den Abgriffen 11 und 12 gemessenen Spannungen nicht möglich. Für alle anderen Winkel α ≠ 0° ist jedoch die Winkelstellung ϕ des Schleifers 13 aus den an den Abgriffen 11 und 12 gemessenen Spannungswerten eindeutig bestimmbar, wie am folgenden Beispiel gezeigt wird.

Aus den in Figur 2b dargestellten Spannungsverläufen für die Abgriffe 11 und 12 ergibt sich bei einer Anordnung der Abgriffe unter einen Winkel α=180° zueinander sowohl für den Abgriff 11 (Kurve 41) als auch für den Abgriff 12 (Kurve 40) bei den beiden Winkeln ϕ=60° bzw. ϕ=300° dieselben Spannungswerte. Demgegenüber ist bei Anordnung der beiden Abgriffe 11 und 12 in einem Winkel von 120° zueinander bei den genannten Winkelstellungen ϕ=60° bzw. ϕ=300° zwar für den zweiten Abgriff 12 (Kurve 40) derselbe Spannungswert, für den ersten Abgriff 11 (Kurve 42) jedoch ein unterschiedlicher Spannungswert zu verzeichnen. Damit ist durch kombinatorische Auswertung der beiden Spannungsverläufe 40, 42 an den ersten beiden Abgriffen 11 und 12 der Widerstandsbahn 10 jede Winkelstellung des Schleifers 13 eindeutig identifizierbar. Eine solche kombinatorische Auswertung zur Erzeugung eines die Winkelstellung des Schleifers eindeutig kennzeichnenden Signals wird in der Auswerteschaltung 18 (Figur 1) vorgenommen.

Ein die Ableitung eines der Winkelstellung des Schleifers 13 eindeutig zugeordneten Signals erschwerendes Moment ist dabei die Tatsache, daß die an den Abgriffen 11, 12 gemessene Spannungsänderung einen nichtlinearen Verlauf aufweist.

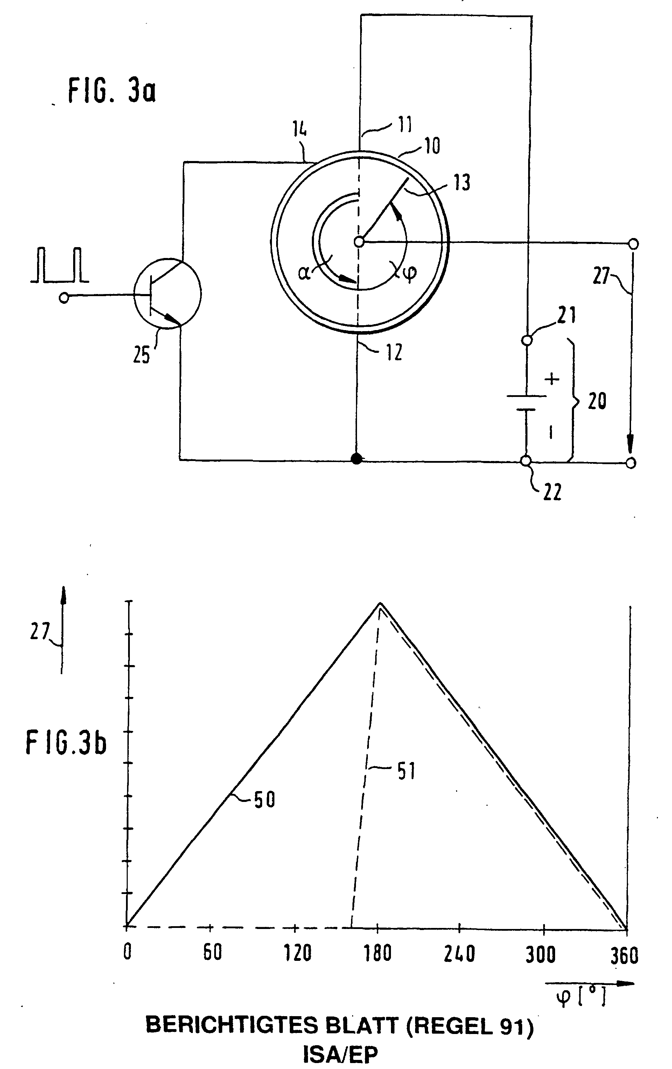

Ein diese Schwierigkeit vermeidendes Ausführungsbeispiel des erfindungsgemäßen Drehwinkelgebers ist in Figur 3a dargestellt.

Der erste und der zweite Abgriff 11, 12 sind an einander gegenüberliegenden Stellen der ununterbrochenen kreisförmigen Widerstandsbahn 10, also unter einen Winkel α=180° zueinander angeordnet. Der erste Abgriff 11 ist dabei mit einer ersten Anschlußklemme 21 einer Gleichspannungsquelle 20 verbunden, während der zweite Abgriff 12 an eine zweite Anschlußklemme 22 derselben Spannungsquelle 20 angeschlossen ist. Ein vierter Abgriff 14 ist an einer Position, die nicht mit einer der Positionen der ersten beiden Abgriffe 11 und 12 zusammenfällt, ebenfalls an die Widerstandsbahn 14 angeschlossen und über einen steuerbaren Schalter 25 mit der zweiten Anschlußklemme 22 der Spannungsquelle 20 verbindbar.

Es sind auch durchaus andere Konstellationen möglich, bei denen die ersten beiden Abgriffe in einem Winkel α ≠ 180° zueinander auf der Widerstandsbahn angeordnet sind, und bei denen der vierte Anschluß 14 über den steuerbaren Schalter 25 entweder mit der ersten oder mit der zweiten Anschlußklemme der Spannungsquelle 20 verbindbar ist. Wesentlich dabei ist, daß der erste und der zweite Abgriff 11, 12 in einem Winkel α ≠ 0° und sinnvollerweise α sehr viel größer 0° zueinander angeordnet sind, und daß der Anschlußpunkt des vierten Abgriffs 14 nicht mit einem der beiden ersten Abgriffe 11 und 12 zusammenfällt. Besonders günstige Konstellationen ergeben sich dabei dann, wenn die beiden ersten Abgriffe möglichst weit voneinander entfernt auf der Widerstandsbahn angeordnet sind und der vierte Abgriff nahe bei einem der ersten beiden Abgriffe angeordnet ist und über den Schalter 25 mit dem gegenüber dem benachbarten ersten oder zweiten Abgriff zugeführten Spannung entgegengesetzten Polarität der Spannungsquelle 20 verbindbar ist. In diesem Fall ergeben sich ähnliche Spannungsverläufe am dritten Abgriff 13 als Funktion des Drehwinkels ϕ, wie die in Figur 3b dargestellten für den in Figur 3a dargestellten Aufbau.

Eine erste Kurve 50 in Figur 3b stellt den Verlauf der Ausgangsspannung 27 am dritten Abgriff 13 in Abhängigkeit des Drehwinkels ϕ bei geöffnetem Schalter 25 dar. Es ist zu erkennen, daß die Spannung 27 in einem Winkelbereich von 0° ≤ ϕ ≤ 180° linear von einem Minimalwert auf einen Maximalwert ansteigt, während sie im Bereich 180° ≤ ϕ ≤ 360° linear von dem Maximalwert auf den vorerwähnten Minimalwert abfällt. Somit ist jeweils zwei unterschiedlichen Drehwinkeln ϕ die gleiche Ausgangsspannung 27 zugeordnet.

Um nun eine eindeutige Identifizierung des Drehwinkels ϕ zu ermöglichen, wird in einer zweiten Messung entschieden, ob der Drehwinkel ϕ zwischen 0 und 180° bzw. zwischen 180 und 360° liegt. Dazu wird zur jeweiligen Drehwinkelstellung ϕ eine zweite Messung bei geschlossenem Schalter 25 vorgenommen, bei der sich der in Figur 3b mit 51 bezeichnete Spannungsverlauf ergibt.

Wie in Figur 1 dargestellt, ist die am dritten Abgriff beim Aufbau gemäß Figur 1 abgreifbare Spannung 27 einer Auswerteschaltung 18 zur Erzeugung eines elektrischen Signals in Abhängigkeit der Winkelstellung ϕ des Schleifers zugeführt. Diese erzeugt beispielsweise ein der Schleiferstellung ϕ bzw. eines vom Schleifer überstrichenen Winkelbereichs, also einer Winkeländerung Δϕ proportionales Signal. Gleiches gilt auch für die Anordnung gemäß Figur 2a, in der der Auswerteschaltung außerdem die Aufgabe zukommt, die Nichtlinearität der Spannungsverläufe zu kompensieren, und diese in ein lineares Signal umzuwandeln.

Im Falle des Spannungsverlaufs 50 der Figur 3b hat die Auswerteschaltung 18 die Aufgabe, diesen in einen stetig differenzierbaren Verlauf umzusetzen, was beispielsweise dadurch möglich ist, daß die Steigung des zweiten Signalabschnitts zwischen 180° und 360° invertiert und zu um den vorerwähnten Maximalwert erhöhten Werten verschoben wird. Damit ergibt sich auch in diesem Fall ein für den Bereich zwischen 0 und 360° linearer Verlauf des Ausgangssignals in Abhängigkeit des Drehwinkels ϕ.

Für den Fall, daß mittels der Anordnung gemäß Figur 3a nicht ein statischer Winkel ϕ, sondern eine Winkeländerung Δϕ erfaßt werden soll, ist es erforderlich, die gemäß des Verlaufs 50 ermittelte Spannung daraufhin zu prüfen, ob sie dem Winkelbereich zwischen 0 und 180° oder dem Bereich zwischen 180° und 360° zuzuordnen ist. Dazu ist es erfindungsgemäß vorgesehen, daß die stetige Erfassung der Spannung 27 am Abgriff 23 bei geöffnetem Schalter 25 durch kurze Meßimpulse, in denen die Spannung 27 bei geschlossenem Schalter erfaßt wird, zu unterbrechen. Dazu wird, wie in Figur 3a angedeutet, der Eingang des steuerbaren Schalters mit einer Pulsfolge beaufschlagt, so daß die Erfassung der Spannung 27 bei geöffnetem Schalter durch kurze Impulse unterbrochen wird. Es ergibt sich damit ein lückenhafter Verlauf 50, dessen Lücken in der Auswerteschaltung 18 interpoliert werden.

Erfindungsgemäß läßt sich mittels des mit Hilfe der Auswerteschaltung 18 erzeugten, einen Drehwinkel ϕ, bzw. eine Drehwinkeländerung Δϕ anzeigenden Signals bei Verwendung des beschriebenen Drehwinkelgebers in einem elektrischen Gerät ein Parameter, beispielsweise die Wiedergabelautstärke eines Autoradios, einstellen. Dazu ist es vorgesehen, daß der einzustellende Parameter aus seinem aktuellen Wert heraus, der in einem Speicher abgelegt ist, um einen Betrag verändert wird, der einem durch den Schleifer 13 überstrichenen Drehwinkel Δϕ entspricht. Dabei bewirkt eine Drehung des Schleifers 13 in eine erste Drehrichtung 16 eine Verminderung des Parameterwerts, eine Drehung in eine zweite Drehrichtung 17 eine Erhöhung des Parameterwerts. Dies ist beispielsweise dadurch realisierbar, daß das der Drehwinkeländerung entsprechende von der Auswerteeinheit 18 abgegebene Signal dem aktuellen Parameterwert hinzuaddiert wird, wobei das von der Auswerteeinheit 18 abgegebene Signal bei Drehung des dritten Abgriffs in die erste Drehrichtung 16 ein negatives Vorzeichen aufweist, so daß der Parameterwert reduziert wird.

## Patentansprüche

1. Anordnung zur Verstellung eines Parameters eines elektrischen Geräts mit einem Drehwinkelgeber, der
- eine kreisförmige Widerstandsbahn (10),
- zwei mit der kreisförmigen Widerstandsbahn fest verbundene Abgriffe (11, 12),
- einen, um den Mittelpunkt der Widerstandsbahn anschlagfrei drehbaren und mit einem einen Drehwinkel (ϕ) übertragenden Element verbundenen, dritten Abgriff (13) und
- eine Auswerteschaltung (18) zur Erzeugung eines durch den dritten Abgriff (13) überstrichenen Drehwinkel (Δϕ) kennzeichnenden Signals durch Auswertung der Widerstandsverhältnisse zwischen mindestens zweien der Abgriffe (11, 12, 13) oder eines aus diesen abgeleiteten Signals
aufweist,
**gekennzeichnet durch**
- einen Speicher, in dem ein Wert des zu verstellenden Parameters speicherbar ist, und
- ein Mittel zur Verknüpfung, das eine Verstellung des Parameters aus seinem gespeicherten Wert heraus um das den Drehwinkel kennzeichnende Signal bewirkt.

2. Anordnung nach Anspruch 1, **dadurch gekennzeichnet, daß** das Mittel zur Verknüpfung als Mittel zur Addition ausgebildet ist, wobei deren erstem Eingang der gespeicherte Parameterwert, deren zweitem Eingang das den überstrichenen Drehwinkel (Δϕ) kennzeichnende Signal zugeführt ist.

3. Anordnung nach einem der vorstehenden Ansprüche, **dadurch gekennzeichnet, daß** der Parameterwert bei Drehung des dritten Abgriffs (13) in Abhängigkeit der Drehrichtung vermindert oder erhöht wird.

4. Anordnung nach einem der vorstehenden Ansprüche, **dadurch gekennzeichnet, daß** der Speicherinhalt durch den in Abhängigkeit einer Veränderung der Winkelstellung (ϕ) des dritten Abgriffs (13) veränderten Parameterwert überschrieben wird.

5. Anordnung nach einem der vorstehenden Ansprüche, **dadurch gekennzeichnet daß** die Widerstandsbahn (10) eine kurze Unterbrechung (15) aufweist, daß beiderseits der Unterbrechung (15) jeweils ein Abgriff (11, 12) angeordnet ist, so daß durch Bestimmung der Widerstandswerte zwischen erstem (11) und drittem Abgriff (13) und zweitem (12) und drittem (13) oder erstem (11) und zweitem Abgriff (12) die Winkelstellung (ϕ) des dritten Abgriffs (13) auf der Widerstandsbahn (10) bestimmbar ist.

6. Anordnung nach Anspruch 5, **dadurch gekennzeichnet, daß** zwischen erstem (11) und zweitem Abgriff (12) eine Spannungsquelle (20) angeordnet ist,
und daß das die Winkelstellung (ϕ) des dritten Abgriffs (13) darstellende Signal die am dritten Abgriff (13) abgreifbare Spannung ist.

7. Anordnung nach einem der Ansprüche 1 bis 4, **dadurch gekennzeichnet daß**,
- eine ununterbrochene Widerstandsbahn (10) vorgesehen ist,
- der erste (11) und der zweite Abgriff (12) in einem Winkel α ≠ 0° und α ≠ 180° zueinander angeordnet sind,
- der dritte Abgriff (13) mit dem ersten Anschluß (21) einer Spannungsquelle (20) und der erste (11) und der zweite Abgriff (12) jeweils über einen elektrischen Widerstand (23, 24) mit dem zweiten Anschluß (22) der Spannungsquelle (20) verbunden sind, und
- durch Auswertung der Spannungen am ersten (11) und am zweiten Abgriff (12) die Winkelstellung (ϕ) des dritten Abgriffs (13) eindeutig bestimmbar ist.

8. Anordnung nach einem der Ansprüche 1 bis 4, **dadurch gekennzeichnet, daß**
- eine ununterbrochene Widerstandsbahn (10) vorgesehen ist,
- der erste (11) und der zweite Abgriff (12) in einem Winkel von α ≠ 0, vorzugsweise α ≈ 180°, zueinander angeordnet und mit jeweils einem Anschluß (21, 21) einer Spannungsquelle (20) verbunden sind,
- ein vierter Abgriff (14), der über einen steuerbaren Schalter (25) mit einem Anschluß (21 oder 22) der Spannungsquelle (20) verbindbar ist, zwischen dem ersten (11) und dem zweiten Abgriff (12) mit der Widerstandsbahn (10) verbunden ist, und
- durch Auswertung der Spannung am dritten Abgriff (13) bei offenem und geschlossenem Schalter (25) die Winkelstellung (ϕ) des dritten Abgriffs (13) eindeutig bestimmbar ist.

## Claims

1. Arrangement for adjusting a parameter of an electrical appliance by means of a rotation angle sensor, which
- has a circular resistance track (10),
- has two taps (11, 12) which are firmly connected to the circular resistance track,
- has a third tap (13) which can rotate indefinitely about the centre point of the resistance track and is connected to an element which transmits a rotational angle (ϕ), and
- has an evaluation circuit (18) for producing a signal which indicates a rotation angle (Δϕ) covered by the third tap (13), by evaluating the resistance ratios between at least two of the taps (11, 12, 13) or of a signal derived from them,
**characterized by**
- a memory in which a value of the parameter to be adjusted can be stored, and
- a means for linking, which causes the parameter to be adjusted from its stored value through the signal which indicates the rotation angle.

2. Arrangement according to Claim 1, **characterized in that** the means for linking are in the form of means for addition, with the stored parameter value being supplied to their first input, and the signal which indicates the rotation angle (Δϕ) covered, being supplied to their second input.

3. Arrangement according to one of the preceding claims, **characterized in that** the parameter value is reduced or increased as a function of the rotation direction during rotation of the third tap (13).

4. Arrangement according to one of the preceding claims, **characterized in that** the memory contents are overwritten by the parameter value which is changed as a function of any change in the angular position (ϕ) of the third tap (13).

5. Arrangement according to one of the preceding claims, **characterized in that** the resistance track (10) has a short interruption (15), **in that** a tap (11, 12) is arranged on each of the two sides of the interruption (15) so that the angular position (ϕ) of the third tap (13) on the resistance track (10) can be determined by determining the resistance values between the first tap (11) and the third tap (13), and between the second tap (12) and the third tap (13), or between the first tap (11) and the second tap (12).

6. Arrangement according to Claim 5, **characterized in that** a voltage source (20) is arranged between the first tap (11) and the second tap (12),
and **in that** the signal which represents the angular position (ϕ) of the third tap (13) is the voltage which can be tapped off on the third tap (13).

7. Arrangement according to one of Claims 1 to 4, **characterized in that**
- an uninterrupted resistance track (10) is provided,
- the first tap (11) and the second tap (12) are arranged at an angle α ≠ 0° and α ≠ 180° with respect to one another,
- the third tap (13) is connected to the first connection (21) of a voltage source (20), and the first tap (11) and the second tap (12) are connected to the second connection (22) of the voltage source (20) via a respective electrical resistor (23, 24), and
- the angular position (ϕ) of the third tap (13) can be determined unambiguously by evaluating the voltages on the first tap (11) and on the second tap (12).

8. Arrangement according to one of Claims 1 to 4, **characterized in that**
- an uninterrupted resistance track (10) is provided,
- the first tap (11) and the second tap (12) are arranged at an angle of α ≠ 0, preferably α ≈ 180°, to one another, and are connected to a respective connection (21, 21) of a voltage source (20),
- a fourth tap (14), which can be connected via controllable switch (25) to one connection (21 or 22) of the voltage source (20), is connected to the resistance track (10) between the first tap (11) and the second tap (12), and
- the angular position (ϕ) of the third tap (13) can be determined unambiguously by evaluating the voltage on the third tap (13) when the switch (25) is open and closed.

## Revendications

1. Dispositif pour régler un paramètre d'un appareil électrique avec un capteur d'angle de rotation comprenant :
- un chemin résistant circulaire (10),
- deux prises (11, 12) reliées de manière fixe au chemin résistant circulaire,
- une troisième prise (13), tournant sans rencontrer de butée autour du centre du chemin résistant, et liée à un élément transmettant l'angle de rotation (ϕ), et
- un circuit d'exploitation (18) pour créer un signal caractérisant l'angle de rotation (Δϕ) parcouru par la troisième prise (13), par l'exploitation du rapport des résistances entre au moins deux des prises (11, 12, 13) ou d'un signal déduit de celles-ci,
**caractérisé par**
- une mémoire dans laquelle est enregistrée une valeur du paramètre à régler et
- un moyen de combinaison qui produit un déplacement du paramètre à partir de sa valeur mise en mémoire du signal caractérisant l'angle de rotation.

2. Dispositif selon la revendication 1,
**caractérisé en ce que**
le moyen de combinaison est réalisé comme moyen d'addition et sa première entrée reçoit la valeur du paramètre mis en mémoire et la seconde entrée reçoit le signal caractérisant l'angle de rotation parcouru (Δϕ).

3. Dispositif selon l'une quelconque des revendications précédentes,
**caractérisé en ce que**
lors de la rotation de la troisième prise (13), la valeur du paramètre diminue ou augmente suivant le sens de rotation.

4. Dispositif selon l'une quelconque des revendications précédentes,
**caractérisé en ce que**
le contenu de la mémoire est remplacé par la valeur du paramètre modifié en fonction d'une variation de la position angulaire (ϕ) de la troisième prise (13).

5. Dispositif selon l'une quelconque des revendications précédentes,
**caractérisé en ce que**
le chemin résistant (10) présente une courte interruption (15),
de part et d'autre de l'interruption (15) on a chaque fois une prise (11, 12) pour qu'en déterminant la valeur de la résistance entre la première prise (11) et la troisième prise (13) ainsi que d'autre part entre la seconde prise (12) et la troisième prise (13) ou encore entre la première prise (11) et la seconde prise (12), on détermine la position angulaire (ϕ) de la troisième prise (13) sur le chemin résistant (10).

6. Dispositif selon la revendication 5,
**caractérisé par**
une source de tension (20) entre la première prise (11) et la seconde prise (12) et
le signal qui représente la position angulaire (ϕ) de la troisième prise (13) est la tension disponible sur la troisième prise (13).

7. Dispositif selon l'une quelconque des revendications 1 à 4,
**caractérisé par**
un chemin résistant ininterrompu (10),
- la première prise (11) et la seconde prise (12) font entre elles un angle α ≠ 0° et α ≠ 180°,
- la troisième prise (13) est reliée à la première prise (21) d'une source de tension (20) et la première prise (11) et la seconde prise (12) sont reliées respectivement par une résistance électrique (23, 24) à la seconde prise (22) de la source de tension (20), et
- en exploitant les tensions sur la première prise (11) et la seconde prise (12) on détermine de manière bijective la position angulaire (ϕ) de la troisième prise (13).

8. Dispositif selon l'une quelconque des revendications 1 à 4,
**caractérisé par**
- un chemin résistant ininterrompu (10), la première prise (11) et la seconde prise (12) faisant entre elles un angle α ≠ 0° et de préférence α ≈ 180°, et ces prises peuvent être reliées chaque fois à une borne (21, 21) d'une source de tension (20),
- une quatrième prise (14) reliée par un commutateur commandé (25) à une borne (21 ou 22) de la source de tension (20), et elle est reliée au chemin résistant (10) entre la première prise (11) et la seconde prise (12) et
- par l'exploitation de la tension sur la troisième prise (13), lorsque l'interrupteur (25) est ouvert et fermé, on détermine de manière bijective la position angulaire (ϕ) de la troisième prise (13).
